# EUROPEAN PATENT APPLICATION

(11) **EP 1 666 139 A1**
(43) Date of publication of application: **07.06.2006**
(21) Application number: 04787840.0
(22) Date of filing: 10.09.2004
(51) Int. Cl.: B01J 20/06, A23L 3/3436

(54) **OXYGEN SCAVENGER AND METHOD FOR PRODUCTION THEREOF**

(30) Priority: 10.09.2003 JP 2003317811
(71) Applicant: National Institute of Advanced Industrial Science and Technology, Tokyo 100-8921 (JP)
(72) Inventor: Taoda, Hiroshi, Chubu Center, 2266-98, Nagoya-shi, Aichi 4638560 (JP)
(74) Representative: Ebner von Eschenbach, Jennifer
(86) International application number: PCT/JP2004/013199
(87) International publication number: WO 2005/025739

(57) **Abstract**

The present invention provides a novel oxygen scavenger and a method for producing the oxygen scavenger, and relates to the oxygen scavenger comprising as an active component a hydroxide of trivalent titanium, or a hydroxide of trivalent titanium being added with water or mixed with a water-containing substance, and to a method for producing the oxygen scavenger which comprises adding water by spraying or some other method to a hydroxide of trivalent titanium, or mixing a powder such as silica or alumina immersed in water with a hydroxide of trivalent titanium, and according to the present invention, it is possible to produce and provide a novel oxygen scavenger having numerous advantages, such as that it is highly safe, does not affect metal detectors and other such devices, exhibits excellent oxygen absorption performance and high oxygen absorption rate, can be used in microwave ovens, and the expiration date thereof can be readily ascertained, and is therefore favorable for the storage of foods and a wide range of other articles.

## Description

### TECHNICAL FIELD

This invention relates to a novel oxygen scavenger, and more particularly relates to a new type of oxygen scavenger that comprises a hydroxide of trivalent titanium as an active component, as well as a method for manufacturing the oxygen scavenger.

The present invention provides a new type of oxygen scavenger, whose active component is a hydroxide of trivalent titanium, which has an oxygen absorption capacity and an oxygen absorption rate equal to or higher than those of conventional iron-based or organic oxygen scavengers in the technological field of oxygen scavengers conventionally used in the storage of a wide range of articles such as processed foods, agricultural and marine products, and other such foodstuffs, metal products, precision machinery, and other such industrial products, pharmaceuticals, art and craft works, and cultural properties, which is very safe to use, and which allows the problems encountered with conventional oxygen scavengers to be reliably solved, and which also provides new functions being not available in conventional products.

The present invention provides a novel oxygen scavenger that does not affect metal detectors and other such devices, or pose any problems when used in microwave ovens, and whose effective expiration date can be ascertained from a change in color, among other advantages, and as such is useful in the development of new technology and new products in this technological field.

### BACKGROUND ART

Oxygen scavengers have been used in the past for the purpose of preventing the modification of foods, such as the oxidative degradation of dry oils, and a variety of oxygen scavengers has been proposed up to now, most of them based on iron (see Japanese Laid-Open Patent Publication Nos S56-2845, S56-130222, and S58-128145, for example). However, it has been indicated that food packaging in which these iron-based oxygen scavengers are sealed are picked up by the metal detectors that are used to prevent contamination by metal foreign matter, such as needles or metal fragments, which can cause these devices to malfunction (see Japanese Laid-Open Patent Publication No. H10-314581, for example). Also, food packaging in which these iron-based oxygen scavengers are sealed cannot be used in microwave ovens, and these and other serious practical problems have required further improvement.

In view of this, ways that have been proposed in the past to reduce the malfunctioning of metal detectors caused by these oxygen scavengers include an oxygen scavenger whose main component is a phenol derivative, and an oxygen scavenger whose main component is ascorbic acid, which is an organic compound that is capable of absorbing oxygen (see Japanese Laid-Open Patent Publication No S59-29033, Japanese Patent No. 2,658,640, and Japanese Laid-Open Patent Publication No 2000-50849, for example). However, since these oxygen scavengers are all organic substances, depending on their usage conditions, it is conceivable that they could melt or dissolve, and it has also been indicated that since they are organic compounds, they can combust as a result of the heat generated by a reaction or the like (see Japanese Laid-Open Patent Publication No. H10-314581, for example).

Meanwhile, it has been proposed that titanium dioxide having an oxygen deficiency be used as an oxygen scavenger for preventing loss of quality through mold, bacteria, insects, oxidation, and so forth in a variety of products, such as foods, clothing, pharmaceuticals, leather goods, wooden articles, precision machinery, and so forth (see Japanese Patent 3,288,265, for example). This titanium dioxide having an oxygen deficiency can be manufactured by heating titanium dioxide in an oxygen-free atmosphere, and to raise the oxygen absorption capacity, the higher the heating temperature, the better, and heating to about 800°C is necessary.

However, a problem with manufacturing an oxygen scavenger by heating to a high temperature is that it drives up the manufacturing cost, and furthermore, it has been reported that if the heating temperature is as high as 800°C, the crystal transition of titanium dioxide will occur all of a sudden, resulting in a change from anatase crystals to rutile crystals (see K. Tabe, T. Kiyoyama, and K. Fueki, "Metal Oxides and Compound Oxides," Koensha Scientific (1978), p. 103, and S. Nishimoto, F. Otani, A. Sakamoto, and T. Kagitani, J. Japan. Chem. Soc., 1984, 246-252 (1984), for example). Therefore, heating to around 800°C is expected to cause strain at oxygen deficiency sites along with changes and transition in the crystal structure of the titanium dioxide. Consequently, there is a decrease in the amount of oxygen that can be absorbed by the oxygen scavenger, and it is difficult to obtain a good oxygen scavenger stably.

Furthermore, with the oxygen scavengers proposed up to now, there is no difference in their external appearance before and after they absorb oxygen, which is a problem in that it is harder to know when the effective expiration date has arrived, which means that the product ends up continuing to be used even though it is no longer able to absorb oxygen.

As discussed above, many different oxygen scavengers have been proposed up to now, but so far no one has proposed a low-cost oxygen scavenger that is safe and effective in a wide range of fields, and that is nonflammable, will not be detected by a metal detector, can be used in microwave ovens, makes its expiration date readily apparent, and satisfies all other such requirements.

### DISCLOSURE OF THE INVENTION

In light of this situation, and with the above-mentioned prior art in mind, the inventor conducted diligent research aimed at developing a novel oxygen scavenger that would allow the above problems to be solved, and as a result discovered that a bluish-black hydroxide obtained by hydrolyzing a trivalent titanium compound has a good oxygen absorption action, and turns white upon absorbing oxygen. Further research into this compound led to the perfection of the present invention. It is an object of the present invention to manufacture and provide a novel oxygen scavenger that does not affect metal detectors and other such devices, can be used in microwave ovens, has excellent oxygen absorption capacity, is low in cost, and is favorable for the storage of a wide range of articles such as processed foods, metal products, precision machinery, and other such industrial products, pharmaceuticals, art and craft works, and cultural properties.

The present invention for solving the problems described above is configured by the following technical means.
(1) An oxygen scavenger characterized by comprising as an active component a hydroxide of trivalent titanium.
(2) The oxygen scavenger according to (1) above, wherein the oxygen scavenger comprises a heated and dried substance of the hydroxide of trivalent titanium.
(3) The oxygen scavenger according to (1) above, wherein the oxygen scavenger comprises a hydrous hydroxide of trivalent titanium.
(4) The oxygen scavenger according to (1) above, wherein the oxygen scavenger comprises the hydroxide of trivalent titanium or a heated and dried substance thereof, and water.
(5) The oxygen scavenger according to (1) above, wherein the oxygen scavenger comprises the hydroxide of trivalent titanium or a heated and dried substance thereof, and a porous material immersed with water.
(6) The oxygen scavenger according to (5) above, wherein the porous material is silica, alumina, zeolite, diatomaceous earth, clay, or activated carbon, or a mixture of these.
(7) The oxygen scavenger according to (4) or (5) above, wherein the oxygen scavenger contains water in an amount of 0.1 to 10 mass parts per 10 mass parts of the hydroxide of trivalent titanium.
(8) The oxygen scavenger according to any of (1) to (7) above, wherein the oxygen scavenger is in a form in which the active component is sealed or admixed in a packaging material or a packaging container.
(9) The oxygen scavenger according to (8) above, wherein it has a form in which the active component is sealed or admixed in a gas-impermeable packaging material or packaging container under an oxygen-free atmosphere.
(10) The oxygen scavenger according to any of (1) to (9) above, wherein the oxygen scavenger has the property of turning white when the oxygen scavenging function of it is either reduced or used up.
(11) A method for increasing an oxygen absorption rate of an oxygen scavenger, comprising adding water or a water-containing substance to a hydroxide of trivalent titanium, or to a heated and dried substance thereof.
(12) The method for increasing an oxygen absorption rate of an oxygen scavenger according to (11) above, wherein water is added in an amount of 0.1 to 10 mass parts per 10 mass parts of the hydroxide of trivalent titanium.
(13) A method for producing an oxygen scavenger characterized by comprising hydrolyzing a trivalent titanium compound.
(14) The method for producing an oxygen scavenger according to (13) above, wherein the trivalent titanium compound is hydrolyzed at a pH ranging from 1 to 4.
(15) The method for producing an oxygen scavenger according to(13) or (14) above, wherein the trivalent titanium compound is one or more types selected from among trivalent titanium halides, trivalent titanium organic acid salts, hydrates of these, trivalent titanium complexes, and trivalent organotitanium compounds.
(16) The method for producing an oxygen scavenger according to (13) or (14) above, wherein the trivalent titanium compound is heated and dried after being hydrolyzed.
(17) The method for producing an oxygen scavenger according to(16) above, wherein a step comprising hydrolyzing the trivalent titanium compound, separating a product from a solution, and then heating it to obtain a dried substance is adopted.

The present invention will now be described in further detail.

The oxygen scavenger of the present invention is characterized by comprising a hydroxide of trivalent titanium as an active component. Favorable examples of the trivalent titanium compound to be used in the present invention include titanium trichloride, titanium tribromide, and other such trivalent titanium halides, titanium(I) sulfate octahydrate and other such sulfates, nitrates, phosphates, acetates, oxalates, propionates, and other such organic acid salts, hydrates of these, complexes in which ammonia, ethylenediamine, or the like is coordinated to trivalent titanium, and alkoxides, acetyl acetonates, and other such organotitanium compounds, as well as mixtures of these. When these are added to water, they are hydrolyzed, which gives a precipitate of a bluish-black hydroxide. The hydrolysis of the trivalent titanium compound is preferably performed under an atmosphere that is free of oxygen gas, such as a nitrogen gas atmosphere. This bluish-black hydroxide is the main component of the oxygen scavenger of the present invention. When water is added to this and it is brought into contact with oxygen, it absorbs the oxygen and changes color from bluish-black to white.

There are no particular restrictions on the form of the trivalent titanium compound to be used in the present invention, examples of which include grains, spheres, granules, and a powder, but it is preferable for the particle size to be smaller and the surface area larger because hydrolysis will proceed better and the hydroxide that is manufactured will have a higher oxygen absorption capacity.

The water to be used to hydrolyze the trivalent titanium compound may be pure water or an alkaline aqueous solution, but the hydrolysis is preferably performed at a pH ranging from 1 to 4. Within this pH range, the trivalent titanium will stabilize and the yield of trivalent titanium hydroxide will be better, but outside of this pH range, the trivalent titanium will become tetravalent titanium and will lose its ability to absorb oxygen. Most trivalent titanium compounds are acidic, so when these are used, favorable examples the alkaline aqueous solution that is used to adjust the pH include ammonia, urea, sodium hydroxide, potassium hydroxide, water glass, sodium carbonate, sodium hydrogencarbonate, and amines, one or more of which may be contained.

The oxygen absorption capacity can be increased by adding water to a hydroxide obtained by hydrolyzing a trivalent titanium compound. The amount of water added to the trivalent titanium hydroxide in this case is preferably at least 0.01 times and no more than 2 times the mass of the trivalent titanium hydroxide. If the water is added in too small an amount, there will be only minimal increase in the oxygen absorption rate, but there will also be almost no increase in oxygen absorption rate if the amount of added water is too large. Preferably, the amount of added water is from 0.1 to 10 mass parts, and even more preferably from 0.1 to 5 mass parts, per 10 mass parts of trivalent titanium hydroxide, and the amount of added water is preferably adjusted as needed according to the humidity of the hair containing the oxygen brought into contact with the trivalent titanium hydroxide, or the water content of this compound.

Examples of how the water is added to the hydroxide of trivalent titanium include a method in which water is directly mixed with a hydroxide of trivalent titanium, a method in which water is sprayed with a sprayer or the like onto the surface of a hydroxide of trivalent titanium, and a method in which water is warmed or otherwise vaporized and then brought into contact with a hydroxide of trivalent titanium. Other examples include a method in which a hydroxide of trivalent titanium is mixed with a water-containing substance, and a method in which water is first supported on or made to impregnate a powder of silica, alumina, zeolite, activated carbon, or the like, and then dispersed and mixed in a hydroxide of trivalent titanium. It is particularly favorable for a powder of a metal oxide, such as silica or alumina, to be made to contain water and then mixed in this form with a hydroxide of trivalent titanium. The mixing of the water and the hydroxide of trivalent titanium is preferably performed under an atmosphere that is free of oxygen gas, such as a nitrogen gas atmosphere. The water used here preferably contains no dissolved oxygen.

When a hydroxide of trivalent titanium is used alone, it usually absorbs oxygen gradually over a period of from 40 to 500 hours, but with the oxygen scavenger of the present invention, which makes use of a trivalent titanium hydroxide to which water has been added, the oxygen absorption rate is greatly increased, so that the absorption of oxygen is complete in about 2 to 10 hours.

The trivalent titanium hydroxide, or trivalent titanium hydroxide to which water has been added, obtained in this manner is put into a gas-impermeable packaging container or packaging pouch, preferably under an oxygen-free atmosphere that has been replaced with nitrogen or the like, or is mixed into a plastic film or other such packaging material or into a plastic container or other such packaging container, to obtain the oxygen scavenger finished product of the present invention. Favorable examples of packaging containers include a pouch made of a gas-impermeable synthetic resin, and a metal container, and the structure may be such that the airtight state is broken at the time of use. A packaging pouch is preferably made of a synthetic resin, metal foil, or other material that is impermeable to oxygen, and the structure may be such that the airtight state is broken at the time of use. Furthermore, a trivalent titanium hydroxide, or a trivalent titanium hydroxide to which water has been added, may be directly kneaded into a packaging container such as a plastic container or a packaging material such as an oxygen-permeable plastic film. The present invention is not limited to these specific configurations, and the configuration may be designed as needed.

Silica, montmorillonite, or another such natural mineral, activated clay or another such processed mineral, synthetic silica, zeolite, or another such synthetic mineral, activated carbon or another such adsorbent, or the like may also be used as needed as auxiliary components in the oxygen scavenger of the present invention. Also, oxygen scavengers used in the past, or components that promote oxygen absorption, for example, may be used as needed to the extent that the benefits of the present invention are not compromised.

The present invention provides the following special effects. (1) The oxygen scavenger of the present invention makes no use of iron-based components whatsoever, so the problem of being picked up by metal detectors and so forth that was encountered with conventional oxygen scavengers is eliminated, nor is there any worry that problems such as melting, dissolution, or burning will occur as was the case when using organic compounds such as ascorbic acid-based oxygen scavengers, so a very safe oxygen scavenger can be used in a wide range of applications. (2) The oxygen scavenger of the present invention has good oxygen absorption capacity and offers excellent performance as an oxygen scavenger, while at the same time is low in toxicity, remains in solid form over a wide range of temperatures, and there is no worry about contamination of food or the like through melting or dissolution, and is nonflammable, and these and other benefits make this oxygen scavenger superior to conventional oxygen scavengers and make it safe to use in an extremely wide range of applications. (3) The oxygen scavenger of the present invention does not affect metal detectors and the like, nor does it pose any problem when used in a microwave oven. (4) It is easy to tell when the oxygen scavenger loses its ability to absorb oxygen because it turns white. (5) After it has absorbed oxygen, the oxygen scavenger of the present invention turns into titanium dioxide when heated, and can be used as a photocatalyst, so the used waste can be recycled as a useful substance that can be used in a wide range of environmental purification applications. (6) The oxygen scavenger of the present invention can be used favorably in the storage of a wide range of articles such as processed foods, agricultural and marine products, and other such foodstuffs, metal products, precision machinery, and other such industrial products, pharmaceuticals, art and craft works, and cultural properties.

### BEST MODE FOR CARRYING OUT THE INVENTION

The present invention will now be described in specific terms through examples, but the present invention is not limited in any way by the following examples. In these examples, all percentages are by mass unless otherwise specified.

### Example 1

### (1) Preparation of oxygen scavenger composed of trivalent titanium hydrate

Titanium trichloride, titanium tribromide, and other such trivalent titanium halides, sulfates, nitrates, phosphates, acetates, oxalates, propionates, and other such organic acid salts, hydrates of these, complexes in which ammonia, ethylenediamine, or the like is coordinated to trivalent titanium, and alkoxides, acetyl acetonates, and other such trivalent organotitanium compounds, or mixtures of these were added in a large excess amount to water and hydrolyzed by being heated under reflux in a nitrogen gas flow, which gave a blue precipitate. The precipitate thus obtained was separated by centrifuge and rinsed thoroughly with water, after which it was again separated by centrifuge. This product was put in a glove box and heated and dried in a nitrogen atmosphere, after which it was divided into two gas-impermeable plastic pouches (gas barrier pouches) and taken out. These were weighed, and it was found that 2.2 g of trivalent titanium hydroxide in the form of a bluish-black powder had been obtained.

### (2) Oxygen Absorption Capacity Measurement Method and Results

1000 mL of air was introduced into a plastic pouch (gas barrier pouch) containing 1.0 g of one of the bluish-black powders contained in these two plastic pouches, after which the oxygen concentration was measured. As a result, the trivalent titanium hydroxide in the form of a bluish-black powder completely absorbed the oxygen in approximately 20 days, and the amount of oxygen absorbed was 30.0 mL/g (25°C). The powder, which had been bluish-black prior to oxygen absorption, had turned white after absorbing oxygen. A Check Mate O₂/CO₂ oxygen concentration meter made by PBI-Dansensor A/S was used to analyze the oxygen concentration. Measurements in the following examples were made using this same apparatus.

### (3) Preparation of Oxygen Scavenger Composed of Trivalent Titanium Hydrate and Synthetic Silica Impregnated with Water

In dividing up the reactants into 2 parts in the glove box and taking them out, 1.2 g of trivalent titanium hydroxide (bluish-black powder) that was taken out separately from the portion used for measuring the above-mentioned oxygen absorption capacity, and the product of impregnating 0.7 g of synthetic silica (Nipsil NS-K made by Nippon Silica Kogyo) with 0.4 g of water were put into a plastic pouch (gas barrier pouch), temporarily sealed with a sealing clip (A-74 made by Mitsubishi Gas Chemical), and taken out of the glove box, then sealed with heat sealer, which gave an oxygen scavenger comprising a mixture of a trivalent titanium hydroxide and synthetic silica impregnated with water. 500 mL of air was injected with a syringe into the sealed pouch of this oxygen scavenger. In this injection, elastic tape was applied to the pouch to prevent outside side from getting into the pouch during injection.

### (4) Results

The pouch was lightly shaken to bring the reaction product and water into contact, and then left to stand for 1 hour in a dark place, after which the amount of oxygen absorption was 20.5 mL/g (25°C). After 2 hours the amount of oxygen absorption was 28.2 mL/g (25°C), and after 4 hours it was 32.3 mL/g (25°C). As mentioned above, when air is injected into a hydroxide of trivalent titanium without any treatment with water being performed, and the product then allowed to stand, it takes approximately 20 days to absorb the oxygen, but it was found that the addition of water accelerates the oxygen absorption, allowing the maximum oxygen absorption of which the reaction product is capable to be reached in about 4 hours, and allowing oxygen to be absorbed in a short time when this product is used as an oxygen scavenger.

### Example 2

### (1) Preparation of oxygen scavenger composed of trivalent titanium hydrate

Titanium trichloride, titanium tribromide, and other such trivalent titanium halides, sulfates, nitrates, phosphates, acetates, oxalates, propionates, and other such organic acid salts, hydrates of these, complexes in which ammonia, ethylenediamine, or the like is coordinated to trivalent titanium, and alkoxides, acetyl acetonates, and other such trivalent organotitanium compounds, or mixtures of these were added to alkaline aqueous ammonia, to adjust the pH, and the substance was hydrolyzed by being heated under reflux in a nitrogen gas flow, which gave a bluish-black precipitate.

This was filtered off in a nitrogen gas flow and rinsed with water, after which it was transferred into a glove box, which was completely replaced with nitrogen gas until the oxygen concentration in the glove box reached 40 ppm or lower, after which the trivalent titanium hydroxide (bluish-black powder) was taken out of the reactor and put into a gas-impermeable plastic pouch (gas barrier pouch) under a nitrogen gas flow and with the oxygen concentration held at 50 ppm or lower, and the pouch was then taken out of the glove box. Specifically, a small, battery-powered electronic scale was placed inside the glove box, 2.0 g of trivalent titanium hydroxide (bluish-black powder) was weighed into a plastic pouch (gas barrier pouch), synthetic silica that had already been impregnated with water (and which had been placed in the glove box prior to replacement with nitrogen gas) was put in thè pouch, and this was temporarily sealed with a sealing clip to prepare a sample.

### (2) Results

Oxygen scavengers (bluish-black powders) a to f prepared as above under varying pH values during hydrolysis were put into plastic pouches (gas barrier pouches), 1000 mL of air was introduced into each pouch, the oxygen concentration was measured, and the amount of oxygen absorption was found. In this injection, elastic tape was applied to the pouch to prevent outside side from getting into the pouch during injection. The pouch was lightly shaken to bring the oxygen scavenger and water into contact, and then left to stand in a dark place for 2 hours or 48 hours, after which the amount of oxygen absorption (25) was measured. These results are given in Table 1.

**Table 1**

| Samples of oxygen scavenger | | a | b | c | d | e |
|---|---|---|---|---|---|---|
| Weight of reactants (g) | | 2.0 | 2.0 | 2.0 | 2.0 | 2.0 |
| Weight of water (g) | | 0.5 | 0.5 | 0.5 | 0.5 | 0.5 |
| Weight of synthetic silica (g) | | 1.0 | 1.0 | 1.0 | 1.0 | 1.0 |
| Amount of oxygen absorption (ml/g), 25°C | After 2 hrs | 15.5 | 51.5 | 54.7 | 53.4 | 20.0 |
| | After 48 hrs | 18.2 | 58.5 | 60.2 | 59.0 | 23.5 |
| pH value during hydrolysis | | 0.5 | 1 | 2.5 | 4 | 5 |

As shown in Table 1 above, the ability of the obtained oxygen scavengers to absorb oxygen varied with the pH value during the hydrolysis of the trivalent titanium compound. It was confirmed that an oxygen scavenger prepared such that the pH during hydrolysis was between 1 and 4 is better able to absorb oxygen. Furthermore, a maximum of 70 mL of oxygen absorption per gram was obtained by optimizing the hydrolysis conditions.

### Comparative Example 1

Typical commercially available oxygen scavengers are those based on iron and those based on ascorbic acid, and these come in various sizes depending on the amount of oxygen absorption, such as 100 (for 100 mL use), 200 (for 200 mL use), and 300 (for 300 mL use). The amount of oxygen absorption was measured for three different iron-based commercially available oxygen scavengers and three based on ascorbic acid. First, each was put in a glove box that had been replaced with nitrogen gas, the packaging pouch of the commercially available oxygen scavenger was torn and the oxygen scavenger was taken out, 2.0 g was weighed out with a small, battery-powered electronic scale that had been placed inside the glove box, and this amount was put in a plastic pouch (gas barrier pouch) and sealed. This plastic pouch (gas barrier pouch) was taken out of the glove box, 1000 mL of air was introduced into the pouch, the oxygen concentration after the pouch had been allowed to stand for 48 hours (25°C) was measured with a Check Mate O_{2/}CO₂ oxygen concentration meter made by PBI-Dansensor A/S, and the amount of oxygen absorption was found.

As a result, with the iron-based oxygen scavengers, oxygen absorption values of 66 mL, 68 mL, and 73 mL per grain were obtained, for an average of 69 mL per gram. With the ascorbic acid-based oxygen scavengers, oxygen absorption values of 44 mL, 50 mL, and 53 mL per gram were obtained, for an average of 49 mL per gram. In contrast, the oxygen scavengers of the present invention had oxygen absorption capacities ranging from 60 mL to a maximum of 70 mL per gram, so it can be seen that their oxygen absorption capacity is equal to or higher than that of conventional oxygen scavengers. These results are given in Table 2.

**Table 2**

| Types | Iron- based (3 types) | Ascorbic acid- based (3 types) | Titanium oxide-based (present invention) |
|---|---|---|---|
| Amount of oxygen absorption | 69/mL/g (average) | 49/mL/g (average) | 60 to 70 mL/g |

### Example 3

In this example, a food storage experiment was conducted using oxygen scavengers. Polyethylene terephthalate and polyethylene were laminated and formed into a pouch (approximately 6 cm x approximately 6 cm), which was made gaspermeable by making small holes in it. 5.0 g of trivalent titanium hydroxide (bluish-black powder) produced by the same method as in Working Example 1 was put into the pouch, as was a uniform mixture prepared by impregnating 3.0 g of synthetic silica (Nipsil NS-K made by Nippon Silica Kogyo) with 2.0 g of water. This was put into a gas-barrier plastic pouch and quickly heat-sealed to produce an oxygen scavenger finished product. At the time of use, this was to be lightly shaken to uniformly mix the contents, and is used by tearing the gas-barrier plastic pouch.

The sealed pouched containing the oxygen scavenger finished product produced above and 80 g of waffle were quickly put into a transparent, gas-barrier bag and the opening was heat-sealed. The air inside the bag was extracted with a syringe, and then 500 mL of air was injected with a syringe. In the extraction and injection with a syringe, elastic tape was applied to the bag to prevent outside side from getting in. 24 hours later the oxygen concentration inside the bag was measured and found to be 2.1 vol%, and that after 48 hours was 0 vol%. This sample was left for 15 days in a dark place at room temperature (20 to 25°C), but there was no change in the appearance of the waffle. The carbon dioxide concentration was less than 1 vol% from the start and throughout the entire 15 days.

### Comparative Example 2

86 g of waffle was put in a transparent, gas-barrier bag and the opening was heat-sealed. The air inside the bag was extracted with a syringe, and then 500 mL of air was injected with a syringe. In the extraction and injection with a syringe, elastic tape was applied to the bag to prevent outside side from getting in. This sample was left in a dark place at room temperature (15 to 25°C), and the oxygen concentration was measured and found to be 20.2 vol% after 48 hours, and 10.5 vol% after 72 hours. On the fourth day mold appeared on the surface, with a number of blackish-blue mold colonies being seen. Also, after its first appearance, the mold steadily spread out. The oxygen concentration decreased, finally reaching 0 vol% after 96 hours. The carbon dioxide concentration at this point was over 40 vol%, meaning that an extremely large quantity of carbon dioxide was being produced, and it is believed that the proliferation of the mold was lowering the oxygen concentration and quickly increasing the carbon dioxide concentration. Because of this, visual confirmation was impossible after 72 hours, but it is believed that the proliferation of mold had already started, and that the oxygen concentration had been decreased. Comparison of Example 3 and Comparative Example 2

In Example 3, the effect of the oxygen scavenger of the present invention resulted in the oxygen concentration inside the gas-barrier plastic bag dropping to 0 vol% between 48 and 72 hours after the production of the sample, and nothing unusual was noted when the waffle was stored for over 15 days. On the other hand, in Comparative Example 2, mold started to grow on the waffle after 3 days, was visible to the naked eye on the fourth day, and continued growing rapidly thereafter.

### INDUSTRIAL APPLICABILITY

As discussed in detail above, the present invention relates to a novel oxygen scavenger and a method for manufacturing the same. The present invention provides a novel oxygen scavenger with high oxygen absorption capacity and oxygen absorption rate. Whereas the oxygen absorption capacity of iron-based, organic, and other oxygen scavengers used in the past was around 60 mL per gram, that of the oxygen scavenger of the present invention is from 60 mL to as high as 70 mL per gram, so this oxygen scavenger has oxygen absorption capacity and oxygen absorption rate that are equal to or higher than those of conventional oxygen scavengers. Unlike iron-based oxygen scavengers, the oxygen scavenger of the present invention does not make use of any iron-based components, so it will not cause a malfunction in metal detectors and poses no problem when used in microwave ovens and the like. Also, since the components of the oxygen scavenger of the present invention are inorganic compounds, there is no worry about melting, dissolution, burning, or other such problems encountered with conventional organic oxygen scavengers that make use of organic compounds, so safety is higher. Also, it is easy to tell by a change in color, for example, when the oxygen scavenger of the present invention has reached its expiration date, so it has a function not available up to now, and is useful as an oxygen scavenger that can be used in a wide range of applications. Furthermore, unlike when an iron-based oxygen scavenger or the like consists of iron powder, salt, and sawdust, for example, the oxygen scavenger of the present invention is basically made up of water and a hydroxide of trivalent titanium, so it is safe and non-toxic, and after it has absorbed oxygen, it can be heated and converted into titanium dioxide, which can be used as a photocatalyst, so the used waste can be recycled as a useful substance that can be used in a wide range of environmental purification applications. Furthermore, the oxygen scavenger of the present invention can also be used to prevent the rusting or iron and other metals. Therefore, the present invention provides a new oxygen scavenger having functions unavailable up to now, and new applications for this oxygen scavenger, and as such is useful in that it allows the creation of new industries.

## Claims

1. An oxygen scavenger **characterized by** comprising as an active component a hydroxide of trivalent titanium.

2. The oxygen scavenger according to Claim 1, wherein the oxygen scavenger comprises a heated and dried substance of the hydroxide of trivalent titanium.

3. The oxygen scavenger according to Claim 1, wherein the oxygen scavenger comprises a hydrous hydroxide of trivalent titanium.

4. The oxygen scavenger according to Claim 1, wherein the oxygen scavenger comprises the hydroxide of trivalent titanium or a heated and dried substance thereof, and water.

5. The oxygen scavenger according to Claim 1, wherein the oxygen scavenger comprises the hydroxide of trivalent titanium or a heated and dried substance thereof, and a porous material immersed with water.

6. The oxygen scavenger according to Claim 5, wherein the porous material is silica, alumina, zeolite, diatomaceous earth, clay, or activated carbon, or a mixture of these.

7. The oxygen scavenger according to Claim 4 or 5, wherein the oxygen scavenger contains water in an amount of 0.1 to 10 mass parts per 10 mass parts of the hydroxide of trivalent titanium.

8. The oxygen scavenger according to any of Claims 1 to 7, wherein the oxygen scavenger is in a form in which the active component is sealed or admixed in a packaging material or a packaging container.

9. The oxygen scavenger according to Claim 8, wherein it has a form in which the active component is sealed or admixed in a gas-impermeable packaging material or packaging container under an oxygen-free atmosphere.

10. The oxygen scavenger according to any of Claims 1 to 9, wherein the oxygen scavenger has the property of turning white when the oxygen scavenging function of it is either reduced or used up.

11. A method for increasing an oxygen absorption rate of an oxygen scavenger, comprising adding water or a water-containing substance to a hydroxide of trivalent titanium, or to a heated and dried substance thereof.

12. The method for increasing an oxygen absorption rate of an oxygen scavenger according to Claim 11, wherein water is added in an amount of 0.1 to 10 mass parts per 10 mass parts of the hydroxide of trivalent titanium.

13. A method for producing an oxygen scavenger **characterized by** comprising hydrolyzing a trivalent titanium compound.

14. The method for producing an oxygen scavenger according to Claim 13, wherein the trivalent titanium compound is hydrolyzed at a pH ranging from 1 to 4.

15. The method for producing an oxygen scavenger according to Claim 13 or 14, wherein the trivalent titanium compound is one or more types selected from among trivalent titanium halides, trivalent titanium organic acid salts, hydrates of these, trivalent titanium complexes, and trivalent organotitanium compounds.

16. The method for producing an oxygen scavenger according to Claim 13 or 14, wherein the trivalent titanium compound is heated and dried after being hydrolyzed.

17. The method for producing an oxygen scavenger according to Claim 16, wherein a step comprising hydrolyzing the trivalent titanium compound, separating a product from a solution, and then heating it to obtain a dried substance is adopted.
